# EUROPEAN PATENT APPLICATION

(11) **EP 4 794 172 A1**
(43) Date of publication of application: **19.08.2026**
(21) Application number: 25157328.3
(22) Date of filing: 12.02.2025
(51) Int. Cl.: H02J 50/10, H02J 50/40, H02J 50/12, H02J 7/02

(54) **POWERING-SYSTEM FOR POWERING MEDICAL EQUIPMENT IN AN OPERATION ROOM**

(71) Applicant: Siemens Healthineers AG, 91301 Forchheim (DE)
(72) Inventor: Popescu, Stefan, 91056 Erlangen (DE)
(74) Representative: Siemens Healthineers Patent Attorneys

(57) **Abstract**

The invention pertains to a powering-system (20) for powering medical equipment (14) in an operation room, comprising:
- a mobile med system (1) with a mobile support-structure (2), electric medical equipment (14) or space for arranging electric medical equipment (14) on the support-structure (2), a power-distribution-system (6) for supplying power to electric medical equipment (14) arranged in the mobile med system (1), and an inductive-power-interface (9), designed to generate power by using inductive coupling, being electrically connected to the power-distribution-system (6), and
- multiple inductive-powering-units (10) designed to distribute power by using inductive coupling and arranged at a floor (13) and connected to a power-supply (11), wherein the inductive-power-interface (9) of the mobile med system (1) and the number of inductive-powering-units (10) are designed to couple in an inductive manner such that each inductive-powering-unit (10) could induce a current in the inductive-power-interface (9) when the inductive-power-interface (9) is positioned over the inductive-powering-unit (10) and wherein the powering-system (20) is designed such that the mobile med system is able to be powered by multiple inductive-powering-units (10) at the same time.

Furthermore, the invention describes a medical facility.

## Description

The invention describes a powering-system for powering medical equipment in an operation room.

Most medical actions are performed in rooms for medical operations ("operation rooms"), for example a room for therapeutical procedures, examinations or an operating room. A modern operating room (OR) is a healthcare asset that uses high-tech devices to perform various surgical procedures in combination with aggregated patient information. The impact of advanced technologies has gained momentum with the introduction of laparoscopic surgeries. This process continues today with the spreading of minimally invasive and robotic surgery.

The situation has become much more complicated by the increase in the number of electric and electronic instruments used in therapeutic procedures. These types of instruments, which are increasing in number, are essential for performing surgical procedures, yet they came with the challenge of introducing a very high number of power cables and data connections. Examples are the anesthesia workstations, the endoscopes and other accessories (light source, high-resolution cameras and monitors), cautery devices, aspirators and hoses, gas hoses used in laparoscopic surgery, camera cables, lighting cables and many other cables and connections depending on the type of surgery.

Disordered equipment and cable connections causes many undesirable situations such as congestion and cables entanglement. Regularly an extra team member is required to ensure that the operation field stays in working condition. The high number of cables and the plugging and unplugging of the connections complicate the therapeutic process, as well as preventing nursing interventions and equipment transfers.

Due to these problems, the free movement of the team members across the operating room is prevented, there are problems in fixing the cables, and unwanted problems such as cable breaks and connection failures may occur. Furthermore, patient deaths, permanent injuries, life-threatening situations, and the possibility of damage to the devices have been reported in hospitals related to the problems with cable connections of medical devices. Despite these difficulties, there is no suitable and comprehensive solution known in the literature that could solve these problems.

Various design solutions have been proposed to prevent the physical entanglement of connections and cables in the operating room. For example:
- a multi-socket-panel attached to the equipment cart for powering multiple instruments,
- a hanger over the ceiling that guides cables into the sterile area,
- ceiling-mounted columns that descend to the surgical environment when desired and return to a safe-position after use,
- ceiling-mounted equipment and
- marking of lines and cables with different colors and patterns.

Nevertheless, the problems related to cables and connections that cause physical and electrical disruption in the operating room persists, since these recommendations are not widely used in the clinic or not implemented at all. In a systematic review and meta-analysis an estimated 64% of OR employees were reported having problems with the cables and connections in the operating room. Further 43% of the employees reported that cable routing prevented their work. The failure rate in cables and connections in the operating room was 22%, and cable and connection problems caused by device failures were 14%. Cable and connection problems developed in robotic surgery operations were seen at an average of 42%.

It is the object of the present invention to improve the known systems and methods and provide a powering-system for powering medical equipment in an operation room and a medical facility for overcoming the above described problems. Especially, it was an object of the present invention to reduce the number of cables in an operation room.

This object is achieved by a powering-system according to claim 1 and a medical facility according to claim 15.

A powering-system according to the invention serves for powering medical equipment in an operation room. It comprises the following components:
- a mobile med system with a mobile support-structure, electric medical equipment or space for arranging electric medical equipment on the support-structure, a power-distribution-system for supplying power to electric medical equipment arranged in the mobile med system, and an inductive-power-interface, designed to generate power by using inductive coupling, being electrically connected to the power-distribution-system, and
- multiple inductive-powering-units designed to distribute power by using inductive coupling and arranged at (i.e. on, in or under) a floor and connected to a power-supply, wherein the inductive-power-interface of the mobile med system and the number of inductive-powering-units are designed to couple in an inductive manner such that each inductive-powering-unit could induce a current in the inductive-power-interface when the inductive-power-interface is positioned over the inductive-powering-unit and wherein the powering-system is designed such that the mobile med system is able to be powered by multiple inductive-powering-units at the same time.

The powering-system serves for a use in an operation room. This operation room according to the invention is meant to be a room for medical procedures such as surgical interventions (an operating room), examinations or therapeutic procedures. This operation room may be e.g. as a medical facility for (especially interventional) CT scanners or MRi scanners, for angiography, for angio-CT therapy or a room for any other medical intervention where electric medical equipment has to be moved over a floor.

The powering-system is a system comprising energy sources (the inductive-powering-units), energy consumers or at least a rack where consumers could be arranged (the mobile med system) and provides a way to get energy from the sources to the consumers (induction). It is important for the invention that multiple sources could power the consumers at the same time.

The mobile med system is made for supporting and powering medical equipment. It is movable, e.g. on wheels, and comprises a mobile support-structure. This support structure is movable and could e.g. be a rack, a shelf, a cabinet, a trolley or the housing of a device. The mobile med system could be a medical device, made to host electric medical equipment or already comprise electric medical equipment. It should be noted that "movable" in the sense of the invention means that the mobile med unit could be carried or better be shifted by a human.

The mobile med system also comprises the power-distribution-system that directs power from the location it is supplied to medical equipment. This power-distribution-system preferably comprises cables but could preferably also comprise sockets for plugging plugs of medical devices in. With these sockets, all electric medical devices could be used that are typically connected to sockets at the wall of an operation room.

Mobile systems with a support-structure, medical equipment and a power-distribution-system are well known in the art and comprising cables and plugs to be powered by a wall-socket. In contrast, the mobile med system according to the invention additionally comprises an inductive-power-interface that is designed to generate power in an inductive manner, i.e. by generating power from alternating magnetic fields. The very principle of inductive coupling is well known in the art, however not used for powering mobile med systems. The inductive-power-interface is electrically connected to the power-distribution-system in order to power medical equipment arranged at the mobile med system. It is preferred that the mobile med system is also designed to be connected to wall mounted power outlets (e.g. by way of extension power cords) in a case of an emergency or failure conditions when the wireless power connection fails to work reliably.

In order to power the mobile med system, the powering-system comprises multiple inductive-powering-units designed to supply power by using inductive coupling and arranged at (this means on, in or under) a floor and connected to a power-supply. For example, the powering system may comprise multiple wire-coils that are arranged in or under tiles of the floor. In general, inductive-powering-units and their operation are well known in the art and typically are coils of an electrically conductive material and driven by an alternating current converter that produces an alternating current in the coils that result in an alternating magnetic field.

The inductive-power-interface of the mobile med system and the number of inductive-powering-units are designed to couple in an inductive manner such that each inductive-powering-unit could induce a current in the inductive-power-interface when the inductive-power-interface is positioned over the inductive-powering-unit. Since every oscillating system has an optimal mode of operation (especially a special frequency), the modes of operation of the inductive-power-interface and the inductive-powering-units should be adapted to each other.

It is important that the powering-system is designed such that the mobile med system is able to be powered by two or more inductive-powering-units at the same time. This means that the arrangement of inductive-powering-units is such that there are positions where two inductive-powering-units power the mobile med system at the same time. Preferably, the inductive-powering-units are arranged such that in operation their magnetic fields overlap (with adjacent magnetic fields). This has the advantages that power supply of the mobile med unit is secure and enough power could be supplied via different supply channels. For example, the inductive-powering-units are arranged with a distance smaller than the diameter of the inductive-power-interface and their operation is preferably synchronized concerning the generated magnetic fields. The inductive-power-interface could be a large coil that is able to receive magnetic fields from multiple sources or could comprise multiple coils arranged side-by-side in a region.

It is preferred that the inductive-power-interface is arranged such on the mobile med system that it is very near the floor, e.g. hanging under the support structure between wheels.

A medical facility (basically an operation room) according to the invention is especially an operating room, an MRI-assisted intervention room, a room dedicated and serves for interventional CT scanners, or a room for angio-CT therapy units. It comprises a powering-system according to the invention.

Particularly advantageous embodiments and features of the invention are given by the dependent claims, as revealed in the following description. Features of different claim categories may be combined as appropriate to give further embodiments not described herein.

A preferred powering-system comprises a control-system designed for operating neighboring inductive-powering-units in a synchronous manner (i.e. at same frequency and in phase) such that an inductive-power-interface could draw power from more than one inductive-powering-unit. This means that the currents flowing through the inductive-powering-units are synchronized in time and direction such that the resulting magnetic fields are positively interfering with each other. In an easy example, the inductive-powering-units could be coils that are arranged at different locations in an identical orientation at a floor and the control system could emit the same alternating current over cables with the same length to the individual coils.

According to a preferred powering-system, the inductive-powering-units and the inductive-power-interface are designed for a resonant inductive power connection. This results in an optimal transmission of power.

A preferred powering-system comprises a control-system (the same as above or a different one) designed to activate an inductive-powering-unit of the number of inductive-powering-units only for a time where the inductive-power-interface is positioned to be able to receive power from this inductive-powering-unit, e.g. over this inductive-powering-unit or otherwise in close proximity. This has the advantage that power is spared in that resistive losses in other units are reduced. Only the inductive-powering-units needed for powering the mobile med system are supplied with alternating current. There could also be the case that magnetic fields could disturb medical equipment. By controlling the of inductive-powering-units in such way, only these fields used for powering are used (and their magnetic emission is small due to the induction). For that, it is preferred that the control-system is designed to measure the inductive load of each inductive-powering-unit and to activate an inductive-powering-unit (only) when the inductive load lies over a given max-threshold and deactivates an inductive-powering-unit when the inductive load lies below a given min-threshold. The inductive-powering-units could periodically be turned on for a short time in order to measure the inductive load. However, there are also other ways to detect, whether there is a compatible inductive-power-interface in close proximity to an inductive-powering-unit.

According to a preferred powering-system, the number of inductive-powering-units is incorporated in tiles that are arranged on a floor, especially the floor of an operating room. Such tiles are easy to produce, easy to place and easy to replace. It is preferred that each powering tile comprises a visual marker on its surface indicating that it comprises an inductive-powering-unit. Thus, the floor may be made of tiles with and without inductive-powering-units (e.g. in a chess-pattern) and markers could indicate optimal positions of a mobile med system.

According to a preferred powering-system, the number of inductive-powering-units is designed to establish inductive connections to an inductive-power-interface of the mobile med system by a non-radiant electromagnetic coupling. The less magnetic radiation is emitted into space, the less potential disturbance due to alternating magnetic fields.

A preferred powering-system comprises a number of data-interfaces, designed to send or receive data by using wireless techniques, preferably by inductive coupling. This could be achieved by using the inductive-powering-units and the inductive-power-interface, however, the bandwidth could be relatively small. A preferred inductive coupling is near field communication (NFC). It is preferred that the powering-system comprises a data-interface designed for bluetooth communication, WLAN communication or inductive data transfer, especially near field communication.

According to a preferred powering-system, the mobile med system additionally comprises:
- a data-distribution-system (e.g. comprising cables, sockets and/or a databus) designed for supplying data to and/or receiving data from medical equipment arranged in the mobile med system,
- a, preferably inductive, data-interface, designed to send or receive data by using inductive coupling, being electronically connected to the data-distribution-system.

According to a preferred powering-system, the mobile med system is designed as or comprises (as medical equipment) one or more devices from the group ECG-station, anaesthesia workstation, endoscope workstation, live-support system, defibrillator, and charging station for electric devices.

According to a preferred powering-system, the support-structure of the mobile med system comprises moving-means, especially wheels, gliders or spheres, arranged in a way that the mobile med system is able to be moved over a floor.

According to a preferred powering-system, the inductive-power-interface of the mobile med system is arranged at the bottom of the support-structure preferably between its moving-means. Thus, it is very near to the floor what is advantageous for an inductive power transfer. It is preferred that the inductive-power-interface is arranged such that it could be lowered on the floor, especially by activating a brake. Thus, the distance to the floor is minimal what is optimal for an inductive power transfer and preferably also for inductive data transfer such as e.g. near field communication (NFC). In addition, the inductive-power-interface on the floor could work as an additional brake.

According to a preferred powering-system, the mobile med system comprises a chargeable battery arranged such that it is chargeable by the inductive-power-interface and is activated in the case that the power of the inductive-power-interface drops below a threshold. This allows an integrated uninterruptible power supply (UPS), to provide backup power in case of failures.

According to a preferred powering-system, the mobile med system comprises multiple inductive-power-interfaces arranged at different positions, especially at different positions in a horizontal plane.

According to a preferred powering-system, the power-distribution-system comprises sockets designed for connecting plugs of electric medical equipment for supplying the medical equipment with power. These sockets allow the use of commercially off the shelf medical equipment.

The new solution eliminates the need for laying cable connections across an operation room in order to provide electric power to the medical devices in operation during e.g. a surgery session. Instead of laying cables between medical devices and power outlets at room walls or power distribution pillars (multi-way power outlets), the new solution provides a contact-less, inductive power transmission to these devices via an interface inductive-power-interface and inductive-powering-units. With this solution any device within the operation room is free to be moved and repositioned around the operation room in the mobile med system as to better suit and depending on the type of surgery or medical intervention.

The new solution could also provide a wireless data communication link between some older medical devices which require a cable connection to e.g. an internet hub in the room. Instead of connecting a data-cable between the medical device and a hub in the room, the new solution connects the medical device to the hospital network via a new inventive wireless interface.

This new solution has a significant advantage over the prior art which results by the fact that it provides (earth) ground insulated power to all medical devices operated within the operation room. This eliminates a safety risk hazard by electric shock, which the healthcare staff in the operation room is subject to. For example, it may occur by touching the metallic case of a faulty equipment and at the same time being connected to the earth or ground by e.g. a wet floor or wet footwears. It is well known for the experts in the art that the electrical equipment and power distribution for an operation room require special solutions to reduce all kind of risks. This is complicating by the fact that an emergency shutdown of power supply to the whole operation room by e.g. a ground fault current interrupter is not possible as the patient life support devices (ventilators, heart pumps etc.) must be maintained in operation.

The inductive connections between the inductive-power-interface and the inductive-powering-units proceed by a non-radiant electromagnetic coupling. It means that an inductive-powering-unit will not radiate energy in form of electric power or data transferring RF fields unless it is in close proximity and resonantly connected to an inductive-power-interface. Various implementations of the non-radiant, resonant, proximity, inductive power connection and wireless data transmission technology are known to an expert from the prior art.

In the case all inductive-powering-units are interconnected to each other such that at least the adjacent ones work in a synchronous manner at same frequency and in phase, such that a inductive-power-interface in close proximity to two or more inductive-powering-units could draw power from multiple devices in parallel, an exact alignment between the inductive-power-interface and the inductive-powering-units below the floor is not mandatory for streamline operation.

Although the invention is very advantageous for application in an operating room, other hospital facilities could benefit from the advantages of the disclosed solution. For example, MRI assisted intervention rooms, rooms dedicated for interventional CT scanners, angio-CT therapy units and many similar.

When the inductive-power-interface is provided with an integrated uninterruptible power supply UPS, e.g. a battery, in order provide backup power in case of failures, a safe operation is possible even during problems with the external power supply.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a mobile medical device according to the state of the art,
Figure 2 shows a mobile med system according to the invention,
Figure 3 shows a floor of an operation room with inductive-powering-units according to the invention,
Figure 4 shows a powering-system according to the invention.

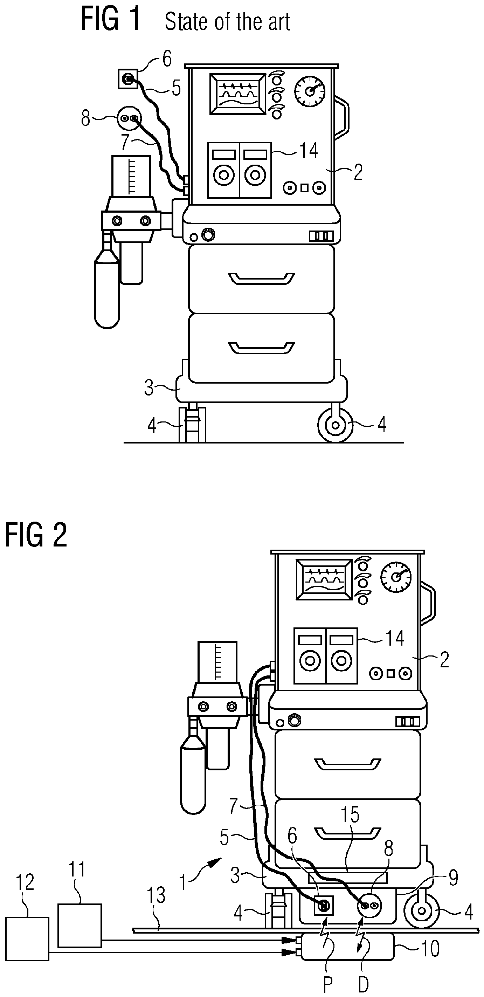

Figure 1 shows a typical mobile medical device according to the state of the art used in an operation room. It is here a mobile support structure 2 with an anaesthesia workstation as medical equipment 14 with a trolley 3 on wheels 4. This and other medical devices need at least a power line 5 to connect to the electricity supply, usually a wall mounted power outlet 6 and one or many data interfaces cables 7, like an LAN connection or similar used to connect to the hospital communication infrastructure via a data-interface socket 8 at the wall.

Figure 2 shows a mobile medical system 1 according to the invention. By this exemplary embodiment, a prior art trolley 3 with wheels 4 as moving-means 4 transporting an anaesthesia workstation (see figure 1) is further upgraded with an inductive-power-interface 9, providing an inductive power connection P and a data communication link D to the mobile med system 1. As exemplary illustrated in figure 2, the prior art power line 5 and the data communication data line 7 connect respectively to a power outlet 6 (as a part of the power-distribution-system 6 of the mobile med system) and a data-interface-socket 8 (as a part of the data-distribution-system 8 of the mobile med system) that are here not arranged on a wall, but at the inductive-power-interface 9. In order to secure the power supply, there is a battery 15 that is charged during normal operation and provides power in the case of a breakdown. There are no additional cables to a wall needed and, thus, the embodiment of figure 1 could be upgraded as mobile med system 1 only by adding the inductive-power-interface 9.

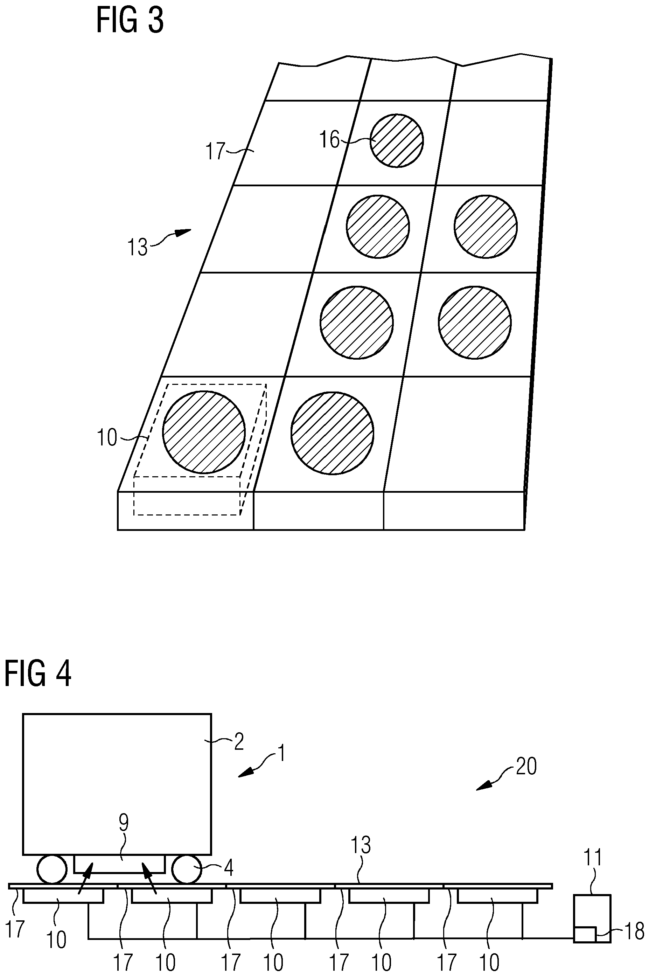

By this solution the medical device 2 is free to move on its wheels 4 across the operation room and thereby hazardous cable congestions and the cable maze are being eliminated. When the trolley 3 with the inductive-power-interface 9 moves across and in close proximity to the operation room floor 13 it inductively couples to inductive-powering-units 10 located below the floor. Many such inductive-powering-units 10 are distributed below the operation room floor 13 (see figure 3), such that the mobile med system 1 is inductively connected to two or more inductive-powering-units 10 at the same time, preferably at any location. The inductive power connection P should be a resonant one and it is activated only when a compatible inductive-power-interface 9 comes in close proximity to that unit.

The inductive-powering-units 10 distributed below the floor 13 are permanently connected by electric cables to a power supply 11 of the hospital power distribution network. Optionally, the inductive-powering-units 10 also provide an inductive and bidirectional data communication link D between the mobile med system 1 and a data-interface 12 of the hospital data communication network.

Figure 3 shows a floor 13 of an operation room with inductive-powering-units 10 arranged in a subset of rectangular tiles 17 of the floor 13. For guiding an optimal positioning of a mobile med system across the operation room floor, visual markers 16 are painted onto those "active" tiles upgraded to provide wireless power. Due to these markers 16, the staff could easily see where to position a mobile med system 1 to optimally receive power and for optimal data communication. This arrangement allows for fast repair services in case of failures. Malfunctioning tiles 17 can easily and in short time be replaced to restore the operation and to avoid wasting precious and expensive operation room time.

Figure 4 shows a powering-system 20 according to the invention. Here, a mobile med system, e.g. as shown in figure 2 is positioned on a floor 13 e.g. as shown in figure 3. The tiles 17 of the floor 13 are equipped with inductive-powering-units 10 that are powered by a power supply 11 and controlled such (by a control-system 18 of the power supply 11) that two or more inductive-powering-units 10 could power the inductive-power-interface 9 of the mobile med system 1 at the same time.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The expression "a number of" means "at least one". The mention of a "unit" or a "device" does not preclude the use of more than one unit or device. Independent of the grammatical term usage, individuals with male, female or other gender identities are included within the term.

## Claims

1. A powering-system (20) for powering medical equipment (14) in an operation room, comprising:
- a mobile med system (1) with a mobile support-structure (2), electric medical equipment (14) or space for arranging electric medical equipment (14) on the support-structure (2), a power-distribution-system (6) for supplying power to electric medical equipment (14) arranged in the mobile med system (1), and an inductive-power-interface (9), designed to generate power by using inductive coupling, being electrically connected to the power-distribution-system (6), and
- multiple inductive-powering-units (10) designed to distribute power by using inductive coupling and arranged at a floor (13) and connected to a power-supply (11), wherein the inductive-power-interface (9) of the mobile med system (1) and the number of inductive-powering-units (10) are designed to couple in an inductive manner such that each inductive-powering-unit (10) could induce a current in the inductive-power-interface (9) when the inductive-power-interface (9) is positioned over the inductive-powering-unit (10) and wherein the powering-system (20) is designed such that the mobile med system is able to be powered by multiple inductive-powering-units (10) at the same time.

2. The powering-system (20) according to claim 1, comprising a control-system (18) designed for operating neighboring inductive-powering-units (10) in a synchronous manner such that an inductive-power-interface (9) could draw power from more than one inductive-powering-unit (10).

3. The powering-system (20) according to one of the preceding claims, wherein the inductive-powering-units (10) and the inductive-power-interface (9) are designed for a resonant inductive (P) power connection.

4. The powering-system (20) according to one of the preceding claims, comprising a control-system (18) designed to activate an inductive-powering-unit (10) of the number of inductive-powering-units (10) only for a time where the inductive-power-interface (9) is positioned over this inductive-powering-unit (10),
preferably wherein the control-system (18) is designed to measure the inductive load of each inductive-powering-unit (10) and to activate an inductive-powering-unit (10) when the inductive load lies over a given max-threshold and deactivates an inductive-powering-unit (10) when the inductive load lies below a given min-threshold.

5. The powering-system (20) according to one of the preceding claims, wherein the number of inductive-powering-units (10) is incorporated in tiles (17) that are arranged on a floor (13), especially the floor (13) of an operating room,
preferably wherein each tile (17) comprises a visual marker (16) on its surface indicating that it comprises an inductive-powering-unit (10).

6. The powering-system (20) according to one of the preceding claims, wherein the number of inductive-powering-units (10) is designed to establish inductive connections to an inductive-power-interface (9) of the mobile med system (1) by a non-radiant electromagnetic coupling.

7. The powering-system (20) according to one of the preceding claims, comprising a number of data-interfaces (12), designed to send or receive data by using wireless techniques, preferably by inductive coupling,
preferably wherein the powering-system (20) comprises a data-interface (12) designed for
- bluetooth communication,
- WLAN communication,
- inductive data transfer, especially near field communication.

8. The powering-system (20) according to one of the preceding claims, wherein the mobile med system (1) additionally comprises:
- a data-distribution-system (8) designed for supplying data to and/or receiving data from medical equipment (14) arranged in the mobile med system (1),
- a, preferably inductive, data-interface (12), designed to send or receive data by using inductive coupling, being electronically connected to the data-distribution-system (8).

9. The powering-system (20) according to one of the preceding claims, wherein the mobile med system (1) is designed as or comprises one or more devices from the group ECG-station, anaesthesia workstation, endoscope workstation, live-support system, defibrillator, and charging station for electric devices.

10. The powering-system (20) according to one of the preceding claims, wherein the support-structure (2) of the mobile med system (1) comprises moving-means (4), especially wheels (4), gliders or spheres, arranged in a way that the mobile med system (1) is able to be moved over a floor (13).

11. The powering-system (20) according to one of the preceding claims, wherein the inductive-power-interface (9) of the mobile med system (1) is arranged at the bottom of the support-structure (2) preferably between its moving-means (4),
preferably wherein the inductive-power-interface (9) is arranged such that it could be lowered on the floor (13), especially by activating a brake.

12. The powering-system (20) according to one of the preceding claims, wherein the mobile med system (1) comprises a chargeable battery (15) arranged such that it is chargeable by the inductive-power-interface (9) and is activated in the case that the power of the inductive-power-interface (9) drops below a threshold.

13. The powering-system (20) according to one of the preceding claims, wherein the mobile med system (1) comprises multiple inductive-power-interfaces (9) arranged at different positions.

14. The powering-system (20) according to one of the preceding claims, wherein the power-distribution-system (6) comprises sockets designed for connecting plugs of electric medical equipment (14) for supplying the medical equipment (14) with power.

15. A medical facility, especially an operating room, an MRI-assisted intervention room, a room dedicated for interventional CT scanners, or a room for angio-CT therapy units, comprising a powering-system (20) according to one of the preceding claims.
